Europäisches Patentamt

European Patent Office

Office européen des brevets

(19)

(11) Veröffentlichungsnummer: **0 029 880**
**B1**

(12) # EUROPÄISCHE PATENTSCHRIFT

(45) Veröffentlichungstag der Patentschrift:
01.02.84

(51) Int. Cl.³: **B 62 D 33/06**

(21) Anmeldenummer: 80104973.5

(22) Anmeldetag: 21.08.80

(54) Lastkraftwagen.

(30) Priorität: 24.08.79 DE 2934272

(43) Veröffentlichungstag der Anmeldung:
10.06.81 Patentblatt 81/23

(45) Bekanntmachung des Hinweises auf die Patenterteilung:
01.02.84 Patentblatt 84/5

(84) Benannte Vertragsstaaten:
AT FR GB IT NL SE

(56) Entgegenhaltungen:
DE - A - 1 555 144
DE - A - 2 741 125

(73) Patentinhaber: **M.A.N. MASCHINENFABRIK
AUGSBURG-NÜRNBERG Aktiengesellschaft, Dachauer
Strasse 667 Postfach 50 06 20, D-8000 München 50 (DE)**

(72) Erfinder: **Flesche, Klaus, Dr., Karlsbaderweg 5,
D-6229 Schlangenbad 5 (DE)**

Lastkraftwagen

Die Erfindung bezieht sich auf einen Lastkraftwagen mit einem einen Rahmen und Achsen umfassenden Fahrgestell und einem darauf angeordneten, aus Kabinensockel und einem davon lösbaren Kabinenoberteil bestehenden Fahrerhaus.

Die verschiedenartige Anordnung der Vorderachse bei Lastkraftwagen verschiedener Größe und verschiedener Zweckbestimmung erfordert bislang für jede Vorderachsanordnung ein entsprechend ausgeführtes Fahrerhaus, wenn man nicht funktionelle und optische Nachteile in Kauf nehmen will, indem das Fahrerhaus nicht optimal zum Fahrgestell paßt. Durch diese notwendige Anpassung des Fahrerhauses an die verschiedenartige Ausbildung des Fahrgestells ergibt sich eine große Vielfalt von Fahrerhäusern, obwohl diese von ihrer eigenen Funktion her vollkommen gleich ausgebildet sein könnten.

Aufgabe der Erfindung ist es daher, einen Lastkraftwagen der eingangs definierten Gattung so auszubilden, daß auf verschiedenartige Konstruktionen des Fahrgestells stets das gleiche Fahrerhaus optimal paßt, wodurch die bisher erforderliche Vielfalt an Fahrerhäusern entfällt und die serienmäßige Fertigung unterschiedlicher Lastkraftwagentypen vereinfacht wird.

Diese Aufgabe wird gelöst bei einem Lastkraftwagen mit einem einen Rahmen und Achsen umfassenden Fahrgestell und einem darauf angeordneten, aus Kabinensockel und einem davon lösbaren Kabinenoberteil bestehenden Fahrerhaus, wobei der Kabinensockel im wesentlichen den Fahrerhausboden und alle am Boden abgestützten Aggregate aufweist und dem Fahrgestell angepaßt ist, und der Kabinenoberteil im wesentlichen aus Frontwand, Seitenwänden mit Türen, Rückwand und Dach besteht, wobei der Lastkraftwagen dadurch gekennzeichnet ist, daß der standardisierte Kabinenoberteil (2) am Kabinensockel (1) mittels eines dazwischen befindlichen, dem Kabinensockel (1) und dem Kabinenoberteil (2) angepaßten Kupplungszwischengliedes befestigt ist, welches Befestigungsstellen für verschiedenartige Ausführungen von Kabinensockeln aufweist.

Aus der deutschen Offenlegungsschrift 1 555 144 ist ein aus zwei übereinander angeordneten und lösbar miteinander verbundenen Fahrerhausteilen bestehendes Fahrerhaus gemäß dem Oberbegriff des Anspruchs 1 bereits bekannt, wobei mit der dortigen Anordnung der Zweck verfolgt wird, bei einem Nutzfahrzeug bestimmter Fahrgestellkonstruktion ein z. B. offenes Fahrerhaus gegen ein geschlossenes auszutauschen. Diese Vorveröffentlichung strebt aber nicht das Ziel der Produktionsvereinfachung bei der serienmäßigen Fertigung unterschiedlicher Fahrzeugrahmenkonstruktionen an und kennt weder einen standardisierten Kabinenoberteil noch ein Kupplungszwischenglied mit Befestigungsstellen für verschiedenartige Ausführungen von Kabinensockeln.

Durch die erfindungsgemäße Ausbildung des Fahrerhauses ergibt sich der Vorteil, daß selbst bei sehr verschiedenartigen Fahrgestellen, wie sie durch verschiedene Achslagen, Radgrößen oder sonstige unterschiedliche Zweckbestimmung des Fahrzeugs verursacht werden, immer baugleiche Kabinenoberteile verwendbar sind. Lediglich der Kabinensockel muß der jeweils speziellen Ausführungsform des Fahrgestells angepaßt sein.

Beim erfindungsgemäßen Lastkraftwagen befindet sich zwischen Kabinensockel und Kabinenoberteil ein beiden Teilen angepaßtes Kupplungszwischenglied. Dieses Kupplungszwischenglied bewirkt, daß es in bezug auf den Kabinensockel unterschiedliche Befestigungsstellen aufweisen kann, wobei bei der Montage dann jeweils die Befestigungsstellen herausgesucht werden, die zum jeweiligen Kabinensockel passen. Dadurch ist das Aufsetzen und Befestigen des Kabinenoberteils auf dem Fahrzeug ein stets gleicher Montagevorgang, so daß der Kabinenoberteil immer im gleichen vormontierten Zustand mit den gleichen Befestigungsmitteln auf dem den Kabinensockel tragenden Fahrgestell aufgesetzt und befestigt werden kann.

In weiterer Ausbildung der Erfindung kann der Kabinenoberteil in an sich bekannter Weise kippbar am Kabinensockel gelagert sein. Dabei ist es vorteilhaft, wenn die entsprechenden Lagerstellen sowohl am Kabinenoberteil als auch am Kabinensockel bzw. am Kupplungsglied bei allen Ausführungsformen bereits vorgesehen sind, so daß man bei der Montage des Kabinenoberteils entweder die Befestigungspunkte wählen kann, die eine Kippbewegung des Kabinenoberteils zulassen, oder jene Befestigungspunkte wählen kann, die den Kabinenoberteil nicht schwenkbar auf dem Kabinensockel festlegen.

Vorteilhaft können an der Frontseite des Kabinenoberteils Befestigungspunkte für eine Motorhaube angeordnet sein. Dadurch wird es möglich, die standardisierten Kabinenoberteile auch für Haubenlastkraftwagen zu verwenden, bei denen der Motor vor der Fahrerhauskabine angeordnet ist. Die Motorhaube kann dann einfach an den Befestigungspunkten des Kabinenoberteils angeschlossen werden, so daß auch für diesen Fahrzeugtyp der gleiche Kabinenoberteil zur Anwendung kommen kann wie bei Frontlenkerlastkraftwagen.

Anhand der Zeichnungen werden Ausführungsbeispiele der Erfindung erläutert. In den Zeichnungen zeigt

Fig. 1 ein Montagebild eines erfindungsgemäßen Lastkraftwagens mit zweigeteiltem Fahrerhaus in Seitenansicht schematisch,

Fig. 2 eine zweite Ausführungsform eines Lastkraftwagens mit zweigeteiltem Fahrerhaus, wobei der Kabinenoberteil weggelassen ist, und

Fig. 3 einen erfindungsgemäßen Lastkraftwagen mit zweigeteiltem Fahrerhaus und mit vor dem Fahrerhaus angeordneter Motorhaube.

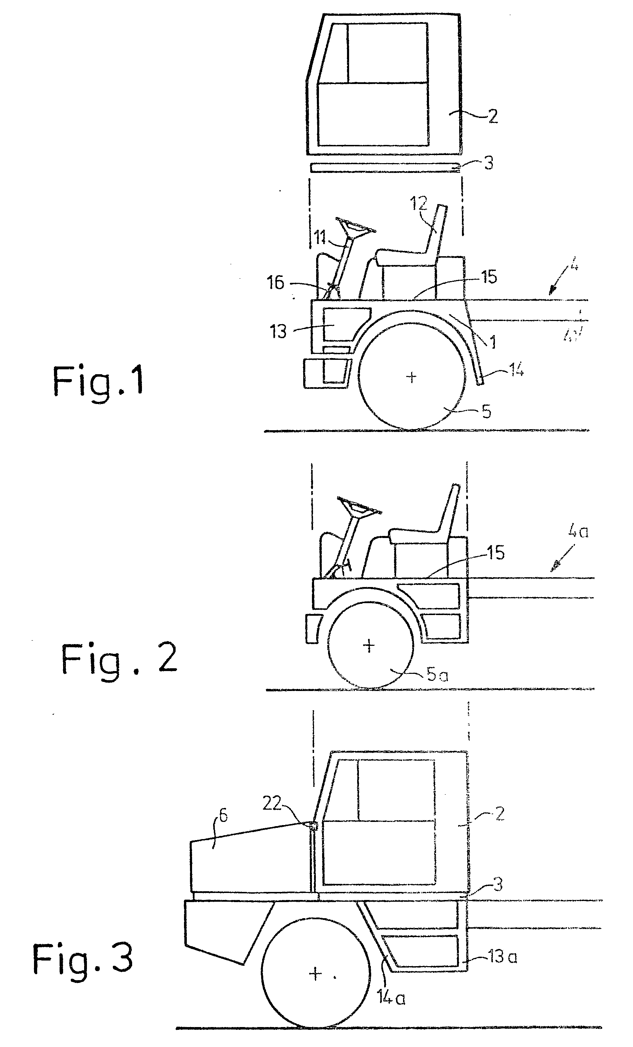

In Fig. 1 ist das vordere Ende des Fahrgestells eines Lastkraftwagens mit 4 bezeichnet. Das Fahrgestell 4 umfaßt einen Rahmen 41 sowie eine Vorderachse 5. Am vorderen Ende des Rahmens 41 oberhalb und vor der Vorderachse 5 ist ein Fahrerhaus auf dem Fahrgestell 4 angeordnet. Das Fahrerhaus ist in einen unteren Kabinensockel 1 und einen Kabinenoberteil 2 zweigeteilt, wobei zwischen Kabinensockel 1 und Kabinenoberteil 2 noch ein Kupplungszwischenglied 3 vorgesehen ist. In der Darstellung der Fig. 1 ist der Kabinenoberteil 2 sowie das Kupplungszwischenglied 3 vom Kabinensockel 1 abgehoben. Der Kabinensockel umfaßt im wesentlichen den Fahrerhausboden 15 und alle am Boden abgestützten Aggregate, wie z. B. Sitze 12, Pedalerie 16, eine Lenksäule 11 und Aufstiege 13. Aus der Ausbildung der Aufstiege 13 sowie der Kotflügel 14, die ebenfalls am Kabinensockel integriert sind, ist ersichtlich, daß der Kabinensockel 1 der speziellen Ausbildung des Fahrgestells 4 im Hinblick auf die Lage der Vorderachse 5 sowie auf die Größe der Vorderräder usw. angepaßt ist. Dagegen ist der Kabinenoberteil 2, unabhängig von der speziellen Ausbildung des Fahrgestells, als standardisierter Bauteil ausgebildet. Der Kabinenoberteil 2 kann so am Kabinensockel 1 gelagert sein, daß eine Kippbewegung des Kabinenoberteils ermöglicht wird. In Fig. 2 ist ein weiteres Fahrgestell 4a eines Lastkraftwagens in Seitenansicht dargestellt, wobei ein Vergleich mit F i g. 1 zeigt, daß das Fahrgestell 4a gemäß Fig. 2 an seinem vorderen Ende sich in seiner Ausbildung bezüglich der Lage der Vorderachse 5a und der Größe der Vorderräder unterscheidet. Lediglich der Boden 15 des Kabinensockels ist so ausgebildet, daß an ihn ein Kupplungszwischenglied 3 (vergleiche Fig. 1) befestigbar ist, auf das dann wiederum ein standardisierter Kabinenoberteil 2 aufgesetzt werden kann.

Das in Fig. 3 dargestellte vordere Ende eines Lastkraftwagens zeigt die Anwendung eines standardisierten Kabinenoberteils 2 bei einem Haubenlastkraftwagen. Bei dieser Ausführungsform eines Lastkraftwagens ist vor dem Fahrerhaus der Antriebsmotor des Lastkraftwagens angeordnet, der durch eine Motorhaube 6 abgedeckt ist. Die Motorhaube 6 ist vorzugsweise an Befestigungspunkten 22 an der Frontseite des Kabinenoberteils 2 befestigt. Ein Vergleich des Lastkraftwagens gemäß Fig. 3 mit den Ausführungsformen nach Fig. 1 und Fig. 2 zeigt, daß der Fahrzeugrahmen wiederum eine andere Ausbildung aufweist als bei den vorgenannten Ausführungsformen. Unterschiedlich sind z. B. die Kotflügel 14a sowie der Aufstieg 13a. Dennoch ist auch bei dem Lastkraftwagen gemäß Fig. 3 der gleiche Kabinenoberteil 2 und das gleiche Kupplungszwischenglied 3 verwendbar, wie bei den Ausführungsformen nach Fig. 1 und Fig. 2.

## Patentansprüche

1. Lastkraftwagen mit einem einen Rahmen (41) und Achsen (5) umfassenden Fahrgestell (4) und einem darauf angeordneten, aus Kabinensockel (1) und einem davon lösbaren Kabinenoberteil (2) bestehenden Fahrerhaus, wobei der Kabinensockel (1) im wesentlichen den Fahrerhausboden (15) und alle am Boden abgestützten Aggregate aufweist und dem Fahrgestell (4) angepaßt ist, und der Kabinenoberteil (2) im wesentlichen aus Frontwand, Seitenwänden mit Türen, Rückwand und Dach besteht, dadurch gekennzeichnet, daß der standardisierte Kabinenoberteil (2) am Kabinensockel (1) mittels eines dazwischen befindlichen, dem Kabinensockel (1) und dem Kabinenoberteil (2) angepaßten Kupplungszwischengliedes (3) befestigt ist, welches Befestigungsstellen für verschiedenartige Ausführungen von Kabinensockeln (1) aufweist.

2. Lastkraftwagen nach Anspruch 1, dadurch gekennzeichnet, daß der Kabinenoberteil (2) kippbar am Kabinensockel (1) gelagert ist.

3. Lastkraftwagen nach den Ansprüchen 1 und 2, dadurch gekennzeichnet, daß an der Frontseite des Kabinenoberteils (2) Befestigungspunkte (22) für eine Motorhaube (6) angeordnet sind.

## Claims

1. A truck having a chassis (4) comprising a frame (41) and axles (5), and, disposed thereon, a driver's cab consisting of a cab base (1) and a cab upper part (2) releasable therefrom, the cab base (1) comprising basically the driver's cab floor (15) and all the units supported on the floor and being adapted to the chassis (4), and the cab upper part (2) consisting basically of a front wall, side walls with doors, a back wall and a roof, characterised in that the standard cab upper part (2) is secured to the cab base (1) by means of an intermediate coupling member (3) which is disposed therebetween and which is adapted to the cab base (1) and the cab upper part (2), said member (3) having fixing points for different constructions of cab bases (1).

2. A truck according to claim 1, characterised in that the cab upper part (2) is pivotally mounted on the cab base (1).

3. A truck according to claims 1 and 2, characterised in that the front of the cab upper part (2) has fixing points (22) for an engine bonnet (6).

## Revendications

1. Camion automobile avec un châssis (4) comprenant un cadre (41) et des essieux (5) ainsi qu'avec une cabine de conduite disposée au-dessus et constituée par un socle de cabine (1) et une partie supérieure de cabine (2) pouvant être séparée de ce socle, le socle de cabine (1) comportant essentiellement le plancher (15) de la cabine et tous les organes reposant sur le plancher et étant adapté au châssis (4), la partie supérieure de cabine (2) étant essentiellement constituée par une paroi avant, des parois latérales avec portes, une paroi arrière et un toit, caractérisé en ce que la partie supérieure de cabine standardisée (2) est fixée sur le socle de cabine (1) au moyen d'un élément d'accouplement intermédiaire (3) adapté au socle de cabine (1) et à la partie supérieure de cabine (2) et se trouvant entre eux, cet élément comportant des zones de fixation pour les divers types de réalisations de socles de cabines (1).

2. Camion automobile selon la revendication 1, caractérisé en ce que la partie supérieure de cabine (1) est montée basculante sur le socle de cabine (1).

3. Camion automobile selon les revendications 1 et 2, caractérisé en ce que des points de fixation (22) pour un capot (6) sont disposés sur la face avant de la partie supérieure de cabine (2).

Fig.1

Fig. 2

Fig.3